# EUROPEAN PATENT APPLICATION

(11) **EP 1 609 650 A1**
(43) Date of publication of application: **28.12.2005**
(21) Application number: 05011435.4
(22) Date of filing: 27.05.2005
(51) Int. Cl.: B60J 7/08, B60J 7/06

(54) **Cover apparatus for a container**

(30) Priority: 01.06.2004 GB 0412195
(71) Applicant: Transcover Engineering Limited, Swantley, Kent BR8 8EE (GB)
(72) Inventor: Hines, Steven William Transcover Engineering Ltd, Kent BR8 8EE (GB)
(74) Representative: Wright, Hugh Ronald

(57) **Abstract**

A cover apparatus for covering an open top of a container comprising: a mounting member, means to move the mounting member between a lower and an upper position, a cover mounted to the mounting member, and at least one arm mounted to the mounting member movable between a first and a second orientation. The or each arm comprising two parts, a first part pivotally attached at one end to the mounting member which, when the arm is in a first orientation, extends downwardly and away from the mounting member, and a second part pivotally attached to the second end of the first part which, when the arm is in the first orientation, extends generally horizontally. The apparatus further comprises means to pivot the arms from the first orientation to a second orientation in which the parts are arranged generally co-linear and horizontal. The arrangement is such that in use the arms are pivotable around the mounting member from the first to the second orientation and the mounting member is movable between the lower and upper positions.

## Description

The present invention relates to a cover apparatus for a removable container, for example, a removable open top container for a road truck for containing material, such as sand, ballast, asphalt, or an open top container placed on a railway truck.

Covers for removable open top containers carried on trucks are well known. In one arrangement an open top container carried on a truck is provided with a cover which is initially wrapped around a roller, the roller extending transversely across the width of the truck preferably at the cab end, the end of the cover remote from the roller being attached to a bar fixed between two arms, such that the cover is pulled lengthwise along the truck, unrolling the cover from the roller, as the bar is moved along the length of the truck by pivotal movement of the arms. Each arm is attached to opposite long sides of the truck, respectively, and operated, for example, by springs, and the cover is rolled up by a motor. In another arrangement the arms are moved by a motor. Whilst such an arrangement has worked quite well, there are a number of technical problems.

The present invention provides a cover apparatus for covering an open top of a container on a truck, (which container may be removable such as a "skip") the cover apparatus comprising a mounting member, means to move the mounting member between a lower and an upper position, the mounting member being mounted either close to or remote from a cab of the truck; a closed cover (by closed we mean, for example, folded or rolled up - i.e. furled) mounted to the mounting member, the mounting member mounting two arms movable between a first and a second orientation, each arm comprising two parts, a first part pivotally attached at one end to the mounting member and, when the arm is in a first orientation, extending downwardly and away from the mounting member, and a second part pivotally attached to the second end of the first part which when the arm is in the first orientation extends generally horizontally; means to pivot the arms from the first orientation to a second orientation in which the parts are arranged generally co-linear and horizontal, whereby, in use, the arms pivot around the mounting member from the first to the second orientation and the mounting member moves from the lower to the upper position and the mounting member then returns towards the lower position with the arms in the second orientation.

When the mounting member is in the upper position and the arms are in the second orientation, the closed cover may be moved from its closed position to an extended position over the open top of the container and the mounting member moved to its lower position to thereby close or substantially close the open top of the container with the cover.

The arms may include a drive means to move the cover from its closed position to its extended position. The drive means may include an engaging means which engages the cover, which engaging means is adapted to move along the respective arm from a position adjacent the mounting member to a position adjacent the opposite end of the arm. This drive means may include a cable driven from a position at or adjacent the mounting means.

If the container is a removable container, the container may be moved onto the truck when the mounting member is in its upper position and the cover is closed and the cover engaged with the open top thereafter.

In a preferred arrangement, when the arms are in the first orientation, the second part extends alongside the part of the truck which mounts the container and is thereby protected.

A preferred embodiment of the invention will now be described by way of example only and with reference to the accompanying drawings in which:-
Figure 1 is a perspective view from the rear and to one side of a road truck with a cover apparatus, showing mounting members in a lower position and arms in a first orientation, the truck mounted with a removable container,
Figure 2 shows the truck of Figure 1 with the mounting members in a position intermediate the lower and upper positions and the arms in an orientation intermediate a first and second orientation,
Figure 3 shows the truck of Figure 1 with the mounting members in an upper position and the arms in a second orientation and generally horizontal and co-linear,
Figure 4 shows the truck of Figure 3 with the cover extending along half the length of the arms,
Figure 5 shows the truck of Figure 3 with the cover fully extended along the arms,
Figure 6 shows the truck of figure 5 with the mounting members returned to the lower position and the cover covering the removable container,
Figure 7 shows a side view of a mounting member in the lower position, and an arm in the first orientation,
Figure 8 shows the mounting member of Figure 7 in the upper position and the arm in the second orientation with the cover in a position intermediate between a closed and a fully extended position, and
Figure 9 shows the mounting member of Figure 8 with the cover in a fully extended position.

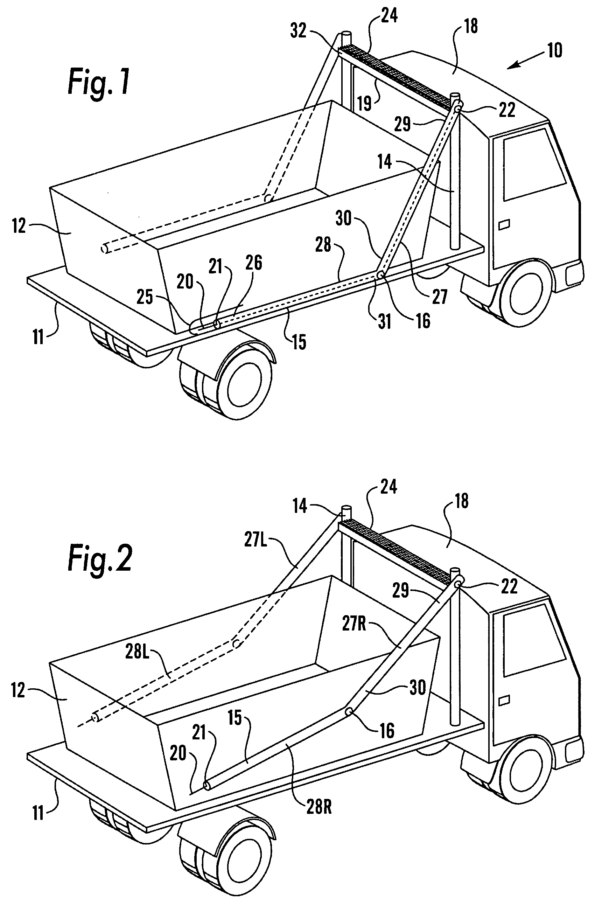

Referring to Figure 1 there is disclosed a road truck 10, including a cab 18 and chassis or flat-bed 11, mounting an open topped, removable container 12, the container being mounted on the truck when fully loaded with sand, ballast, asphalt or the like. The road truck further includes a mounting member -comprising two towers 14, shown in a retracted lower position; each tower placed adjacent a respective corner of the flat-bed 11 adjacent the truck cab 18; and two two-part arms, a first end 29 of a first part 27 of each arm pivotally attached to a pivot point 22 adjacent the top of a respective tower, a second end 30 of the first part 27 of the two-part arm 15 pivotally attached to a first end 31 of the second part 28 of the arm at a pivot point 16. Figure 1 shows the arms 15 in an first orientation with the first part 27 of the arm extending towards the base of the flat-bed 11 and away from tower 14, and the second part 28 of the arm extending generally horizontally along and parallel to the length of the flat-bed. A cover 24 of fabric or netting is shown in a closed position, folded and retained between the two towers 14, with end 19 of cover 24, preferably attached to a rigid bar 32 fixed between respective long sides of the truck 10.

Figure 2 shows each tower 14 partially raised in a position intermediate the lower and an upper position. As the tower moves from the lower position, the first part 27 of each arm 15 rotates about pivot point 22 (clockwise for arm 27L and 27R) away from each tower 14 and the second part 28 of each arm 15 rotates about pivot point 16 in a direction (anticlockwise for 28L and 28R) to straighten the two-part arm. In addition, the arms may move relative to each other such that the distance between the two arms when the arms are in the first orientation is less than the distance between the two arms when in the second orientation.

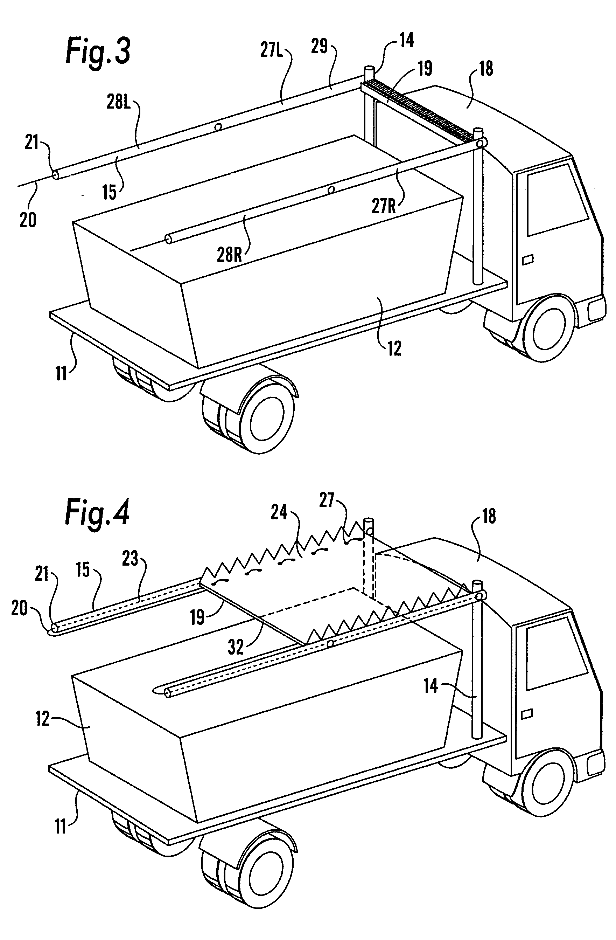

Figure 3 shows each tower 14 raised fully to the upper position, the two parts 27, 28 of each two-part arm 15 being generally co linear and horizontal, each arm 15 extending horizontally away from, and perpendicular to, its respective tower along the length of and parallel to the flat-bed. The cover 16 is in a closed position, preferably folded in a concertina fashion between towers 14.

Figure 4 shows each tower 14 in the second position with each arm in the second orientation with cables 20 attached to the ends 19 of cover 24, pulling the cover into a position intermediate a closed and a fully extended position, by action of a pneumatic or hydraulic motor each cable fed through channels 23, and out through openings 21, in respective arms 15.

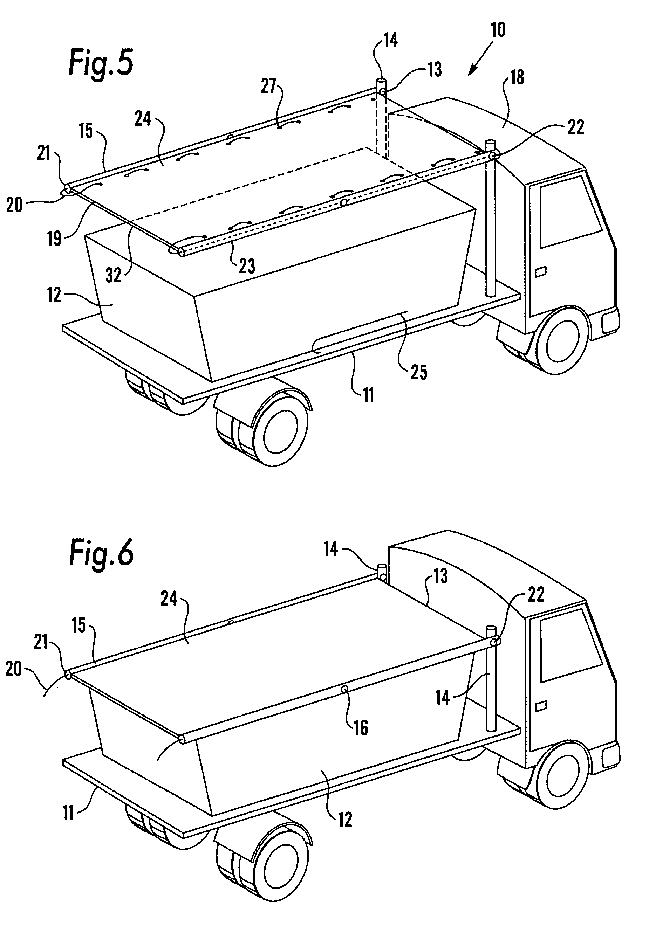

Figure 5 shows the cover in a fully extended position extending beyond the length of the container 12 mounted on the flat-bed 11 of the truck 10. Respective cables 20 are shown threaded through respective edges of each long side of sheet 16 via grommets 27, the cable passing through channels 23 in each arm 14 and out through an opening 21 at the end of each arm to feed back through the grommets in sheet 16.

Figure 6 shows the fully extended cover 24, held in position over the container 12 by generally co linear, horizontal arms 15, the cover lowered over the container 12 due to the return of the towers 14 to the lower position.

The fully extended cover is lowered and is then secured over the removable container.

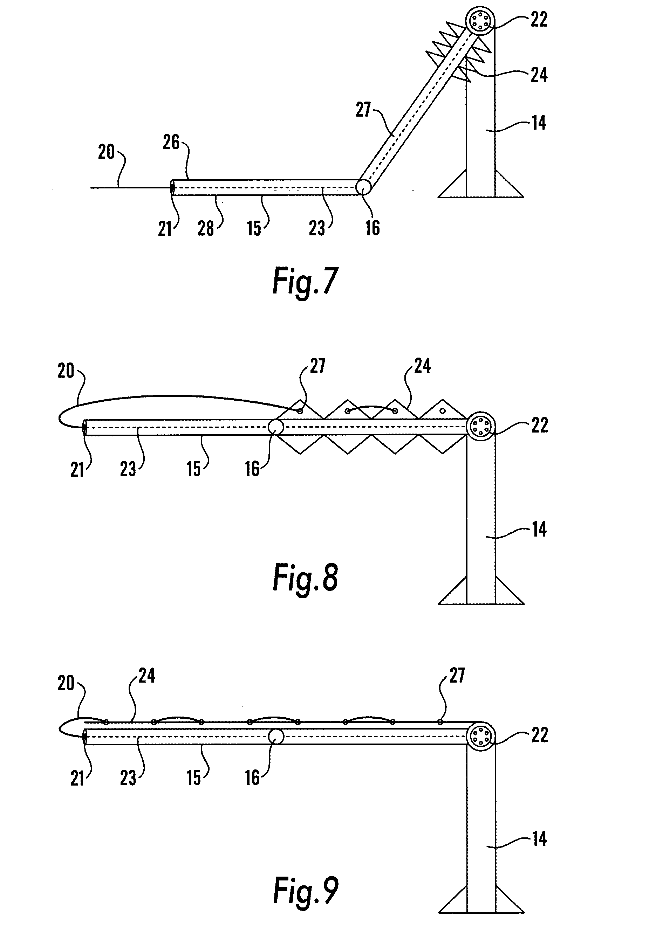

Figures 7 to 9 show details of the towers 14 and arms 15 of the cover apparatus. Figure 7 shows a tower 14 in a lower position with an arm 15 in a first orientation, the first part of the arm extending downwardly and away from the tower 14, the second part of the arm extending generally horizontally. The cover 24 is shown folded in a concertina fashion adjacent the tower 14. Figure 8 shows a tower 14 in an upper position, and an arm 15 extending generally horizontally in a direction perpendicular to the tower 14. Cover 24 is in a position intermediate between a folded, closed position and a fully extended position. Figure 9 shows the arrangement of Figure 8 with the cover 24 fully extended.

In use, a container 12 such as a skip is filled with material to be transported, and the skip is loaded onto a flat-bed 11 of a truck 10. In the first orientation, a first part 27 of each arm extends in a downwardly direction away from its respective tower and a second part 28 of each arm extends generally horizontally along the length of the flat-bed. Ends 26 of the second part 27 of arms 15 fit into respective compartments 25 in flat-bed 11, the compartment 25 provided to protect the arms from damage while the cover apparatus is not in use.

Each tower 14 is then extended, preferably by means of a hydraulic or pneumatic power source, from a lower position to an upper position while each arm 15 moves from the first orientation to the second orientation. The movement of the arms from a first to a second orientation may be by means of a cam, a rack and pinion, a chain or a steel cable. As each tower extends, a first end 29 of the first part 27 of each arm rotates in a clockwise direction about pivot point 22 adjacent the top of its respective tower such that a second end 30 of the first part 27 of the arm moves in a direction away from the tower. A first end 31 of the second part 28 of each arm pivots around pivot point 16 in an anticlockwise direction such that the arm straightens out.

When each tower is fully extended, the two parts 27, 28 forming each arm 15 are arranged in a second orientation and are generally co linear and horizontal, perpendicular to their respective towers, and roughly parallel to the flat-bed base along the length of the flat-bed. The distance between respective arms on respective sides of the flat bed may be greater in the second orientation than in the first orientation.

The cover, preferably folded in a concertina fashion between the two towers 14 in a closed position is then extended from the closed position by means of respective cables 20 which run in channels 23 inside respective arms 15, one end of each cable being attached to end 19 of cover 24 and pulling it from the closed position of Figure 3 to the extended position of Figure 5 by action of an electric or pneumatic motor. Because it is in a high upper position, the cover can be unfolded when clear of the skip and any material inside the skip.

When the cover is fully extended, the towers 14 return to their lower position, and the cover covers the container 12. The arms are closer together in the first orientation than in the second orientation. The cover is then secured about the container 12, and the truck, with its covered container load, is ready to travel.

When it is desired to remove the cover, the steps outlined in Figures 2 to 6 are followed in reverse. First the cover is released from its secure fastening over the container 12; the towers are then extended to the upper position and the cover moved to its folded, closed position between the towers 14. The arms 15 then pivot around pivot points 16, 22 and move from the second orientation of Figure 5 and 9 to the first orientation of Figures 1 and 7, while towers move to the lower position, and ends 26 of arms 15 fit into the respective compartments 25 in flat-bed 11.

The present invention is not restricted to the details of the foregoing embodiment.

For example, the cover may be rolled up, rather than folded, between the two towers, or otherwise retained in a compact manner while in a closed position.

In addition, the arms may move from the first orientation to the second orientation at the same time that the towers move between the lower and upper positions, or they may move successively. The two parts of each two-part arm may be arranged such that in a first orientation both parts are folded together, parallel to each other and their respective tower.

The respective cables 20 which are operative to move the cover between an open position where the cover is folded adjacent towers 14 and a closed position where the cover is fully extended, may be held within arms 14, rather than threaded through the cover 24.

Whilst we have described the invention in relation to an open removable container on a truck, and whilst it is particularly useful in such a use, it could be used with a truck with a non-removable container.

## Claims

1. A cover apparatus for covering an open top of a container comprising:
a mounting member;
means to move the mounting member between a lower and an upper position;
a cover, mounted to the mounting member;
at least one arm mounted to the mounting member movable between a first and a second orientation, the or each arm comprising:
two parts, a first part pivotally attached at one end to the mounting member and, when the arm is in a first orientation, extending downwardly and away from the mounting member, and a second part pivotally attached to the second end of the first part which when the arm is in the first orientation extends generally horizontally;
means to pivot the arms from the first orientation to a second orientation in which the parts are arranged generally co-linear and horizontal,
whereby, in use, the arms are pivotable around the mounting member from the first to the second orientation and the mounting member is movable between the lower and upper positions.

2. A cover apparatus as claimed in claim 1 wherein when the mounting member is in the upper position and the arms are in the second orientation, the cover is movable between a closed position to an extended position over the open top of the container, the mounting member then being movable to its lower position to thereby close or substantially close the open top of the container with the cover.

3. A cover apparatus as claimed in claim 2 wherein the at least one arm includes a drive means to move the cover from its closed position to its extended position.

4. A cover apparatus as claimed in claim 3 or claim 4 wherein said drive means includes an engaging means for engaging the cover, said engaging means adapted to move along the or each respective arm from a position adjacent the mounting member to a position adjacent the opposite end of the arm.

5. A cover apparatus as claimed in claim 4 wherein said drive means includes a cable driven from a position at or adjacent the mounting means.

6. A cover apparatus as claimed in claim 1 wherein with the mounting member in its upper position and the cover closed a container with an open top may be moved adjacent the mounting means and the cover engaged with the open top thereafter.

7. A truck mounting the cover apparatus of claim 1.

8. A truck as claimed in claim 7 wherein when the or each arm is in the first orientation, the second part extends alongside the part of the truck which mounts a container and is thereby protected.
